# EUROPÄISCHE PATENTSCHRIFT

(11) **EP 0 599 285 B1**
(45) Veröffentlichungstag und Bekanntmachung des Hinweises auf die Patenterteilung: **22.05.1996**
(21) Anmeldenummer: 93118900.5
(22) Anmeldetag: 24.11.1993
(51) Int. Cl.: C04B 35/00, C08L 23/02, C08L 91/06, C08K 13/02

(54) **Verfahren und Formmasse zur Herstellung anorganischer Sintererzeugnisse durch Spritzgiessen**
Process and forming mass for the production of inorganic sintered articles by injection molding
Procédé et masse formée pour la préparation d'articles frittés inorganiques par moulage par injection

(30) Priorität: 25.11.1992 DE 4239518
(43) Veröffentlichungstag der Anmeldung: 01.06.1994
(73) Patentinhaber: HOECHST AKTIENGESELLSCHAFT, D-65929 Frankfurt am Main (DE)
(72) Erfinder: Bayer, Michael, D-86462 Langweid (DE); Pyka, Peter, D-89278 Nersingen (DE); Wagner, Heike, D-86672 Thierhaupten (DE)

(56) Entgegenhaltungen:
- EP-A- 0 519 326
- DE-A- 3 942 745
- PATENT ABSTRACTS OF JAPAN vol. 015, no. 202 (C-0834)23. Mai 1991 & JP-A-03 054 158 (KOEI CHEM. CO., LTD.) 8. März 1991
- PATENT ABSTRACTS OF JAPAN vol. 015, no. 202 (C-0834)23. Mai 1991 & JP-A-03 054 158

## Beschreibung

Die Erfindung bezieht sich auf eine keramische oder pulvermetallurgische Formmasse, die durch Spritzgießen geformt wird und die unter Verwendung eines chemisch reagierenden Plastifizierers hergestellt worden ist.

Ausgangsstoff für spritzgegossene Keramik- oder Pulvermetallerzeugnisse ist meist ein feinkörniges Pulver, das mit einem organischen Plastifizierer umhüllt wird und dann durch Spritzguß geformt wird. Vor dem Sintern der Pulver wird der organische Plastifizierer in einem Prozeß, der sich Entbinderung (Debinding) oder Entwachsung (Dewaxing) nennt, entfernt.

Mit Hilfe von Polyolefinen wie Polypropylen oder Polyethylen in Kombination mit Paraffinen lassen sich Spritzgußmassen auf Basis pulvermetallurgischer oder keramischer Pulver herstellen, die die rheologischen Erfordernisse der Spritzgußtechnik erfüllen. Der Spritzgußvorgang läßt sich ebenso wie die Entformung mit diesen Zusammensetzungen problemlos durchführen.

Die Verwendung von Polyethylenwachsen in Kombination mit Esterwachsen auf Basis Rohmontanwachs und EVA läßt, vor allem bei keramischen Pulvern, die metallabriebarme Aufbereitung und Formgebung der Massen zu. Somit kann die damit hergestellte Spritzgußmasse auf allen üblichen Spritzgußautomaten, die gehärtete Verschleißflächen haben, verarbeitet werden.

Die Verwendung von Polyethylenwachsen in Kombination mit Esterwachsen auf Basis Rohmontanwachs in Pulverspritzgußmassen erlaubt Formgebungstemperaturen unterhalb von 150 °C. Die Verarbeitung der so hergestellten Formmassen im Niederdruckspritzguß ist möglich.

Es hat sich jedoch gezeigt, daß die Formstabilität der Bauteile, die aus den beschriebenen Spritzgußmassen hergestellt wurden, bei Temperaturen oberhalb 200 °C nicht ausreicht, um eine verzugsfreie Entwachsung, d.h. Entfernung des Plastifizierers, der Bauteile zu gewährleisten. Vielmehr neigen die Formlinge zum Fließen unter Temperatureinwirkung, was die Maßhaltigkeit der Bauteile beeinträchtigt.

Weiter hat sich gezeigt, daß die Entwachsung der Formteile aufgrund der ungünstigen Zersetzungseigenschaften der oben beschriebenen Thermoplaste eine Prozeßdauer von mehrerenTagen erfordert, um rißfreie Bauteile zu erhalten, was die Pulverspritztechnik, wie sie auch genannt wird, vor allem in der Pulvermetallurgie zu einem unwirtschaftlichen Verfahren macht. Die Zersetzung der organischen Hilfsstoffe ist somit von den Einflußgrößen Temperatur und Zeit bestimmt.

Es ist bekannt, den Entwachsungsschritt über einen breiten Temperaturbereich in Abhängigkeit von der Zusammensetzung des Abgases zu steuern (vgl. DE 36 11 271). Dazu wird die Verbrennung oder Verdampfung des Plastifizierers durch Spreizung der Molmassenverteilung durch Auswahl von hochmolekularen und niedermolekularen Komponenten auf einen breiten Temperaturbereich verteilt.

Für eine ähnliche Vorgehensweise werden Öle, Paraffine, Wachse, Polypropylen, Polyethylen und Ethylen-Vinylacetat-Copolymere als Plastifiziererkomponenten vorgeschlagen (vgl. DE 36 30 690). Auch hier ist die Zusammensetzung des Plastifizierers mit dem Ziel einer breiten Molmassenverteilung gewählt worden.

Nach den beschriebenen Verfahren ist es möglich, Formteile durch Spritzgießen herzustellen, wobei die Verbrennung oder Verdampfung der Einzelkomponenten in jedem Abschnitt des Formteils in Abhängigkeit von der Temperatur in gleicher Weise stattfindet. Das führt zur Ausbildung von Dampfphasen an der Oberfläche, aber auch innerhalb des Körpers, wobei der Formkörper aufgebläht wird.

Bekannt ist auch die Verwendung von Polyacetalen, die durch eine säurehaltige Gasatmosphäre depolymerisiert werden (vgl. EP 455 486, EP 413 231). Dabei wird das organische Bindemittel als Formaldehyd, das nachverbrannt werden muß, entfernt. Diese Verfahrensweise erfordert eine Erweiterung der Ofentechnik hinsichtlich Kontaminationsschutz durch frei werdendes Formaldehyd.

Schließlich ist auch die Verwendung eines thermisch vernetzenden Thermoplastsystems, das mit Hilfe von Azoestern radikalisch abgebaut wird, vorgeschlagen worden (vgl. DE 41 19 997).

Ein Verfahren, beim Gießen der Formteile das Fließvermögen der Spritzgußmischung in die Form hinein zu verbessern, so daß keine Formfehler durch ungenügende Füllung entstehen, die später beim Entwachsen zu Rissen führen können, ist aus DE-A-3 942 745 bekannt.

**Somit bestand die Aufgabe, Formmassen für Spritzguß so herzustellen, daß beim Entwachsen ihre Formstabilität nicht verloren geht und daß der Sinterungsprozeß zum Entwachsen schneller abläuft.**

Es wurde gefunden, daß sich eine Spritzgußformmasse, die neben einem Wachs noch ein Ethylen-Vinylacetat-Copolymer, ein organisches Peroxid , einen Azo-Ester und einen Alkohol enthält, zu einem Formteil spritzgießen läßt und ohne Verlust der Formstabilität des Formteils entwachsen läßt.

Die Erfindung betrifft somit eine Formmasse auf Basis von anorganischen Sinterwerkstoffen bestehend aus
70 bis 96 Gew.Teilen eines Keramik-oder Metallpulvers,
1 bis 10 Gew.Teilen eines halbsynthetischen Wachses mit einem Tropfpunkt von 79 bis 90 °C, einer Säurezahl von 5 bis 35 mg KOH/g,
einer Verseifungszahl von 70 bis 160 mg KOH/g, einer Dichte von 0,97 bis 1,03 g/cm³ und einer Viskosität bei 100 °C von 20 bis 80 mPas,
2 bis 10 Gew.Teilen eines Polyolefinwachses mit einem Tropfpunkt von 102 bis 158 °C, einer Säurezahl von 0 bis 64 mg KOH/g einer Verseifungszahl von 0 bis 115 mg KOH/g, einer Dichte von 0,87 bis 1,03 g/cm³ und einer Viskosität bei 170 °C von 100 bis 1500 mPas,
1 bis 10 Gew.Teilen eines EVA-Copolymers mit einem Schmelzindex von 0,2 bis 440 dg/min, einem VA-Anteil von 11 bis 42 % und einer Vicat-Erweichungstemperatur von 36 bis 80 °C,
0,01 bis 0,05 Gew.Teilen eines organischen Peroxids mit einer SCORCH-Temperatur von mehr als 100 °C,
0,01 bis 0,05 Gew.Teilen eines Azo-Esters und
1 bis 10 Gew.Teilen eines Alkohols **mit einer Molmasse von 300 bis 35000 g/mol und einem Siedepunkt >150°C.**

Die Erfindung betrifft auch ein Verfahren zur Herstellung von keramischen und pulvermetallurgischen Formteilen durch thermoplastische Formgebung, Entwachsung und Sinterung, das dadurch gekennzeichnet ist, daß man die vorgenannte Formmasse auf einer Spritzgußmaschine zu einem Formteil verarbeitet, das Formteil 2 bis 6 h bei einer Temperatur von 10 bis 100°C in einem organischen Lösemittel oder in Wasser lagert, danach in einem Ofen zunächst für 0,1 bis 1 h auf 170 bis 200 °C und dann für 1 bis 10 h auf 200 bis 400 °C in einer Sauerstoffatmosphäre erhitzt und das vom Bindemittel befreite Formteil sintert.

Die erfindungsgemäße Formmasse enthält als Basis nichtmetallische anorganische und metallische Pulver. Dazu gehören Pulver auf Basis von Al₂O₃, AlN, Al₂TiO₅, B₄C, WC, SiC und Silikate sowie daraus erhaltene Recyclingrohstoffe. Die erfindungsgemäß zu verwendenden Pulver auf Metallbasis sind bis zu Temperaturen von 200 °C nicht oxidierbar. Dazu gehören gas- und wasserverdüste Edelstahl-, Werkzeugstahl- oder Edelmetallpulver. Die maximale Korngröße der erfindungsgemäß zu verwendenden nichtmetallisch-anorganischen und metallischen Pulver liegt bei 200 µm.

Weiterhin enthält die Formmasse Wachse. Diese Wachse sind Naturwachse, voll- oder halbsynthetische Wachse, Polyolefinwachse oder Amidwachse. Bevorzugt sind als Wachse halbsynthetische Wachse auf Basis Rohmontanwachs und Polyolefinwachse.

Das bevorzugte halbsynthetische Wachs auf Basis Rohmontanwachs hat folgende Kenndaten:

| | |
|---|---|
| Tropfpunkt | 79 bis 90 °C |
| Säurezahl | 5 bis 35 mgKOH/g |
| Verseifungszahl | 70 bis 160 mgKOH/g |
| Dichte | 0,97 bis 1,03 g/cm³ |
| Viskosität | 20 bis 80 mPas/ bei 100°C |

Das bevorzugte halbsynthetische Wachs auf Basis Rohmontanwachs entsteht durch oxidative Bleichung von Rohmontanwachs und Verestern des so erhaltenen Säurewachses mit einem C₂- bis C₈-Diol. Wachse dieses Typs sind seit vielen Jahren im Handel erhältlich.

Das bevorzugte Wachs auf Basis von Polyolefinwachs hat folgende Kenndaten:

| | |
|---|---|
| Tropfpunkt | 102 bis 158°C |
| Säurezahl | 0 bis 64 mg KOH/g |
| Verseifungszahl | 0 bis 115 mg KOH/g |
| Dichte | 0,87 bis 1,03 g/cm³ |
| Viskosität | 100 bis 1500 mPas/ bei 170 °C |

Das bevorzugte Wachs auf Basis von Polyolefinwachs entsteht durch Massepolymerisation im Niederdruckverfahren nach Ziegler. Diese Polyolefinwachse können durch Behandeln der Schmelze mit Luft zu Oxidaten umgesetzt werden. Auch diese Wachse sind seit vielen Jahren im Handel erhältlich.

Außerdem enthält die erfindungsgemäße Formmasse ein Ethylen-Vinylacetat-Copolymer, welches einen Schmelzindex nach ASTM D 1238 von 0,2 bis 440 dg/min, vorzugsweise 0,2 bis 168 dg/min, einen Vinylacetatanteil von 11 bis 42 %, vorzugsweise 11 bis 28 %, und eine Vicat-Erweichungstemperatur nach ASTM D 790 von 36 bis 80 °C, vorzugsweise 74 bis 79 °C, besitzt.
Ethylen-Vinylacetat-Copolymere sind im Handel erhältlich und werden zur Erhöhung von Zähigkeit, Flexibilität und Elastizität in Kunststoffen, Wachsen und Schmelzklebern verwendet.

Die erfindungsgemäe Formmasse enthält ferner ein organisches Peroxid, das eine Scorch-Temperatur von mindestens 100 °C hat. Dazu gehören 1,1-Di(t-butylperoxi)-trimethyl-cyclohexan, n-Butyl-4,4-di(t-butylperoxi)valerat, Dicumylperoxid, t-Butylcumyl-peroxid, 1,3-Di(t-butylperoxi-isopropyl)benzol und 3,3,6,6,9,9-Hexamethyl-1,2,4,5-tetraoxacyclononan, 2,5-Dimethyl- 2,5-di(t-butyl-peroxi)hexan. Organische Peroxide sind im Handel erhältlich und werden unter anderem zur Vernetzung von Thermoplasten und Elastomeren oder zum thermischen Abbau von Polybutylen oder Polyvinylchlorid verwendet. Bevorzugt ist 2,5-Dimethyl-2,5-di(t-butylperoxi)hexan.

Die erfindungsgemäße Formmasse enthält weiterhin einen Alkohol, der eine Molmasse von 300 bis 35000 **g/mol**, bevorzugt 1000 bis 20000 **g/mol** hat und entweder in fester oder in flüssiger Form vorliegt. Er ist in Wasser, Ethanol, Isopropanol oder Aceton bis zu einer Konzentration von mindestens 40 % löslich und läßt sich rückstandsfrei thermisch aus dem Formteil entfernen. Die Viskosität der 50%igen Lösung in Wasser beträgt 10 bis 14000 mPa.s bei 20°C, bevorzugt 100 bis 2000 mPa.s. Die Dichte des Alkohols beträgt 0,981 bis 1,20 g/cm³, bevorzugt 1,00 bis 1,10 g/cm³. Der erfindungsgemäß zu verwendende Alkohol ist unlöslich in den übrigen Bestandteilen der Formmasse und wird durch Polymerisation von Alkylenoxiden hergestellt. Es können auch primäre, sekundäre oder tertiäre ein-, zwei- oder dreiwertige Alkohole in der erfindungsgemäßen Formmasse eingesetzt werden. Der Siedepunkt des erfindungsgemäß zu verwendenden Alkohols liegt oberhalb 150 °C, vorzugsweise bei180 bis 220°C. Erfindungsgemäß einzusetzende Alkohole sind im Handel erhältlich und werden in der Lebensmittelindustrie, der Papierindustrie und der Klebstoffindustrie verwendet.

Schließlich enthält die erfindungsgemäße Formmasse einen Radikalbildner in Form eines Azo-Esters, vorzugsweise 2,2-Azo-bis(2-acetoxy-propan).

Die Formmasse hat folgende Zusammensetzung:

| | |
|---|---|
| Keramik-oder Metallpulver | 70 bis 96, vorzugsweise 80 bis 96 Gew.Teile, |
| halbsynthetisches Wachs | 1 bis 10, vorzugsweise 1,5 bis 6 Gew.Teile, |
| Polyolefinwachs | 2 bis 10, vorzugsweise 3 bis 6 Gew.Teile, |
| EVA-Copolymer | 1 bis 10, vorzugsweise 1,5 bis 3 Gew.Teile, |
| organisches Peroxid | 0,01 bis 0,05, vorzugsweise 0,02 bis 0,04 Gew.Teile, |
| Azo-Ester | 0,01 bis 0,05, vorzugsweise 0,02 bis 0,04 Gew.Teile, |
| Alkohol | 1 bis 10, vorzugsweise 1,5 bis 6 Gew.Teile. |

Die Herstellung und Verarbeitung der erfindungsgemäßen Formmasse erfolgt auf folgende Weise:
Zur Herstellung der erfindungsgemäß zu verwendenden Binderkomponente werden das halbsynthetische Wachs auf Basis Rohmontanwachs und das Polyolefinwachs bei einer Temperatur von 110 bis 160, vorzugsweise ca. 150 °C in einem geeigneten Rührgefäß aufgeschmolzen und zu einer homogenen Schmelze verarbeitet. Unter Rühren erfolgt nun die Zugabe des Ethylen-Vinylacetat-Copolymers und des Alkohols in die Schmelze. Die Mischung wird bei ca. 150 °C bis zur vollständigen Auflösung aller Komponenten in der Schmelze gerührt. Abschließend erfolgt die vorsichtige Zugabe des organischen Peroxids und des Azo-Esters unter Rühren. Danach wird der Ansatz abgekühlt.

Zur Herstellung der Spritzgußmasse wird der organische Binder in einem heizbaren Kneter aufgeschmolzen. In die im Kneter befindliche Schmelze wird das metallische oder keramische Pulver bei einer Temperatur von ca. 150 °C eingeknetet. Die thermoplastische Knetmasse wird zu einem rieselfähigen Granulat, vorzugsweise durch Extrusion, zerkleinert und auf einer Spritzgußmaschine zu einem Formteil verarbeitet.

Das ausgeformte Formteil zeichnet sich im erkalteten Zustand durch gute Festigkeit aus, die eine zerstörungsfreie Entgratbarkeit und mechanische Bearbeitbarkeit gewährleistet.

Das Bindemittel wird in zwei Stufen entfernt.
Das durch Spritzguß erhaltene Formteil wird in 2 bis 6 h in ca. 50 °C warmen Lösemittel oder Wasser gelagert. Dabei wird der Alkoholanteil aus dem Formteil herausgelöst. Die Vollständigkeit der Entwachsung läßt sich mit Hilfe eines im Alkohol gelösten Farbstoffes kontrollieren.

Danach wird das Formteil in einem Ofen zunächst mit einer Heizrate von 20 K/min auf 170 bis 200 °C, vorzugsweise 180 bis 190 °C, erwärmt und während 0,1 bis 1 h bei dieser Temperatur gehalten. Dabei wird die Viskosität des organischen Binders durch radikalische Vernetzung der EVA-Komponente infolge der Aufspaltung des organischen Peroxides so erhöht, daß die Verformung des Formlings infolge einer Viskositätserniedrigung, verursacht durch weitere Temperaturerhöhung, ausgeschlossen ist. Durch diese Maßnahme bleibt die Form des Formteils über die gesamte Dauer des folgenden Entwachsungs- und Sinterprozesses erhalten.

Die Entfernung der im Formteil noch verbliebenen Binderanteile erfolgt in der zweiten Stufe im Temperaturbereich von 200 bis 400 °C in mit Sauerstoff angereicherter Atmosphäre. Bei einer Temperatur oberhalb 220 °C werden die Wachskomponenten, insbesondere solche, die Polypropylen enthalten, infolge Aufspaltung des organischen Peroxides radikalisch abgebaut. Unter Sauerstoffabschluß, der trotz sauerstoffhaltiger Gasatmosphäre außerhalb des Formteils innerhalb des Formteils auftritt, werden die Bestandteile des Binders, die polymerisiertes Ethylen enthalten (also auch das EVA-Copolymer), nach Aufspaltung des Azo-Esters in einem Temperaturbereich zwischen 300 und 350 °C radikalisch abgebaut. Die Abbauprodukte sind durch die mit Sauerstoff angereicherte Ofenatmosphäre vom Außenbereich des Formteils hin zum Inneren leicht oxidierbar. Unterstützend wirkt dabei das durch die Naßextraktion erhaltene Porensystem, das den Gasfluß innerhalb des Formteils ermöglicht. Nach Abschluß der Entwachsung erfolgt, je nach Pulverrohstoff, die Umstellung der Ofenatmosphäre auf Schutzgas.

Erst nach Durchführung dieses Schrittes kann das entwachste Formteil auf Sintertemperatur gebracht werden.

Nach diesem Verfahren wird ein spritzgegossenes Formteil mit einer Wandstärke von 6 bis 10 mm innerhalb von 10 h verzugsfrei entwachst und gesintert.

Das nachfolgende Beispiel soll die Erfindung erläutern:

### Beipiel 1

0,6 Gew.-Teile Esterwachs auf Rohmontanwachsbasis (TP 79 bis 85 °C; SZ 15 bis 20; VZ 130 bis 160; Dichte 1,01 bis 1,03 g/cm³; Viskosität ca.30 mPa.s/100 °C) wurden mit 1,2 Gew.-Teilen Polyolefinwachs (TP 158 °C; SZ 0; VZ 0; Dichte 0,87 bis 0,89 g/cm³; Viskosität 1500 mPa.s/170 °C) , 1,2 Gew.-Teilen eines Ethylen-Vinylacetat-Copolymers (Schmelzindex 0,2 bis 0,4 dg/min; VA-Anteil 11 bis 13 %; Vicat-Erweichungstemperatur 79 °C) und 3 Gew.-Teilen eines Alkohols (Molmasse 20000 g/mol; Viskosität 13000 mPa.s bei 20°C; Dichte 1,1 g/cm³) bei 150 °C in einem Rührgefäß geschmolzen und zu einer homogenen Schmelze verarbeitet.

In diese Schmelze wurden je 0,02 Gew.-Teile 2,2-Azo-bis(2-acetoxy-propan) und eines organischen Peroxids (Scorch-Temperatur ca.160 °C) eingerührt. In die Polymerschmelze wurden nun bei 150 °C 94 Gew.-Teile eines gasverdüsten Edelstahlpulvers mit einer Korngröße unter 50 µm eingeknetet.

Die thermoplastische Formmasse wurde nun durch Spritzguß (Massetemperatur 150°C) zu Prüfstäben mit einem Durchmesser von 8 mm und einer Länge von 50 bis 60 mm verarbeitet.

Die Prüfstäbe wurden anschließend 5 Stunden in ca. 50 °C warmen Aceton gelagert. Dabei wurden ca. 40 Gew.-% des Binderanteils aus dem Formteil herausgelöst. Die teilentwachsten Formteile wurden mit einer Temperaturerhöhung von 5 K/min in Stickstoff von Raumtemperatur auf 600 °C gebracht. Dabei wurde im Temperaturbereich 170 bis 180 °C der verbleibende Binderanteil thermisch vernetzt, um einer Deformation der Formteile infolge Erweichen vorzubeugen. Oberhalb von 200 °C wurde der übrige Binderanteil unter radikalischem Abbau thermisch entfernt. Anschließend wurden die Formteile bei 1250 °C gesintert.

### Beispiel 2

1,8 Gew.-Teile Esterwachs auf Rohmontanwachsbasis (TP 79 bis 85°C; SZ 15 bis 20; Dichte 1,01 bis 1,03 g/cm³; Viskosität 30 mPa.s bei 100°C) wurden mit 4 Gew.-Teilen Polyolefinwachs (TP 120 bis 125°C; SZ 15 bis 17; VZ 20 bis 35; Dichte 0,97 bis 0,99 g/cm³; Viskosität 4000 mPa.s bei 140°C), 4 Gew.-Teilen eines Ethylen-Vinylacetat-Copolymers (Schmelzindex 38 bis 48 dg/min; VA-Anteil 32 bis 34 %; Vicat-Erweichungstemperatur 36°C) und 9 Gew.-Teilen eines Alkohols (Molmasse 2600; Viskosität der 50%igen wässrigen Lösung bei 20°C 1400 mPa.s; Dichte 1,00 g/cm³) bei 150°c in einem Rührgefäß geschmolzen und zu einer homogenen Schmelze verarbeitet. In diese Schmelze wurden zunächst 0,02 Gew.-Teile 2,2-Azo-bis(2-acetoxypropan) und 0,1 Gew.-Teile eines organischen Peroxids (Scorch-Temperatur 140°C) und danach 0,01 Gew.-Teile eines wasser- und acetonlöslichen Farbstoffes eingerührt.

In die Polymerschmelze wurden nun bei 150°C 80 Gew.-Teile eines Porzellanscherbenmehls mit einer Korngröße kleiner 100 µm eingeknetet.

Die thermoplastische Formmasse wurde nun bei 150°C durch Spritzgießen zu einer Tasse mit Henkel geformt.

Das Formteil wurde anschließend 4 Stunden in 70°C warmem Wasser gelagert, wobei die Entwachsung durch die Verfärbung der wässrigen Lösung durch den in der Formmasse enthaltenen Farbstoff kontrolliert wurde. 45 % des POlymeranteils der Formmasse wurden extrahiert. Das teilentwachste Formteil wurde in Luft mit einer Temperaturerhöhung von 5 K/min von Raumtemperatur auf 600°C gebracht. Dabeiwurde im Temperaturbereich von 170 bis 180°C der verbleibende Binderanteil thermisch vernetzt, um einer Deformation des Formlings infolge Erweichen vorzubeugen. Oberhalb von 200°C wurde der übrige Binderanteil unter radikalischem Abbau thermisch entfernt. Anschließend wurde der entwachste Tassenformling bei 1200°C gebrannt.

## Patentansprüche

1. Formmasse auf Basis von anorganischen Sinterwerkstoffen bestehend aus
70 bis 96 Gew.Teilen eines Keramik-oder Metallpulvers,
1 bis 10 Gew.Teilen eines halbsynthetischen Wachses mit einem Tropfpunkt von 79 bis 90 °C, einer Säurezahl von 5 bis 35 mg KOH/g, einer Verseifungszahl von 70 bis 160 mg KOH/g, einer Dichte von 0,97 bis 1,03 g/cm³ und einer Viskosität bei 100 °C von 20 bis 80 mPas,
2 bis 10 Gew.Teilen eines Polyolefinwachses mit einem Tropfpunkt von 102 bis 158 °C, einer Säurezahl von 0 bis 64 mg KOH/g einer Verseifungszahl von 0 bis 115 mg KOH/g, einer Dichte von 0,87 bis 1,03g/cm³ und einer Viskosität bei 170 °C von 100 bis 1500 mPas,
1 bis 10 Gew.Teilen eines EVA-Copolymers mit einem Schmelzindex von 0,2 bis 440 dg/min, einem VA-Anteil von 11 bis 42 % und einer Vicat-Erweichungstemperatur von 36 bis 80 °C,
0,01 bis 0,05 Gew.Teilen eines organischen Peroxids mit einer SCORCH-Temperatur von mehr als 100 °C,
0,01 bis 0,05 Gew.Teilen eines Azo-Esters und
1 bis 10 Gew.Teilen eines Alkohols **mit einer Molmasse von 300 bis 35000 g/mol und einem Siedepunkt >150°C.**

2. Verfahren zur Herstellung von keramischen und pulvermetallurgischen Formteilen durch thermoplastische Formgebung, Entwachsung und Sinterung,
dadurch gekennzeichnet, daß man eine Formmasse auf Basis von anorganischen Sinterwerkstoffen bestehend aus
70 bis 96 Gew.Teilen eines Keramik-oder Metallpulvers,
1 bis 10 Gew.Teilen eines halbsynthetischen Wachses mit einem Tropfpunkt von 79 bis 90 °C, einer Säurezahl von 5 bis 35 mg KOH/g, einer Verseifungszahl von 70 bis 160 mg KOH/g, einer Dichte von 0,97 bis 1,03 g/cm³ und einer Viskosität bei 100 °C von 20 bis 80 mPas,
2 bis 10 Gew.Teilen eines Polyolefinwachses mit einem Tropfpunkt von 102 bis 158 °C, einer Säurezahl von 0 bis 64 mg KOH/g einer Verseifungszahl von 0 bis 115 mg KOH/g, einer Dichte von 0,87 bis 1,03g/cm³ und einer Viskosität bei 170 °C von 100 bis 1500 mPas,
1 bis 10 Gew.Teilen eines EVA-Copolymers mit einem Schmelzindex von 0,2 bis 440 dg/min, einem VA-Anteil von 11 bis 42 % und einer Vicat-Erweichungstemperatur von 36 bis 80 °C,
0,01 bis 0,05 Gew.Teilen eines organischen Peroxids mit einer SCORCH-Temperatur von mehr als 100 °C,
0,01 bis 0,05 Gew.Teilen eines Azo-Esters und
1 bis 10 Gew.Teilen eines Alkohols **mit einer Molmasse von 300 bis 35000 g/mol und einem Siedepunkt >150°C**
auf einer Spritzgußmaschine zu einem Formteil verarbeitet, das Formteil 2 bis 6 h bei einer Temperatur von 10 bis 100°C in einem organischen Lösemittel oder in Wasser lagert, danach in einem Ofen zunächst für 0,1 bis 1 h auf 170 bis 200 °C und dann für 1 bis 10 h auf 200 bis 400 °C in Luft, Sauerstoff- oder Schutzgasatmosphäre erhitzt und das vom Bindemittel befreite Formte sintert.

## Claims

1. A molding compound based on inorganic sinterable materials and comprising
from 70 to 96 parts by weight of a ceramic or metal powder,
from 1 to 10 parts by weight of a semisynthetic wax having a drop point of from 79 to 90°C, an acid number of from 5 to 35 mg KOH/g, a saponification number of from 70 to 160 mg KOH/g, a density of from 0.97 to 1.03 g/cm³ and a viscosity at 100°C of from 20 to 80 mPas,
from 2 to 10 parts by weight of a polyolefin wax having a drop point of from 102 to 158°C, an acid number of from 0 to 64 mg KOH/g, a saponification number of from 0 to 115 mg KOH/g, a density of from 0.87 to 1.03 g/cm³ and a viscosity at 170°C of from 100 to 1500 mPas,
from 1 to 10 parts by weight of an EVA copolymer having a melt index of from 0.2 to 440 dg/min, a VA proportion of from 11 to 42% and a Vicat softening temperature of from 36 to 80°C,
frog 0.01 to 0.05 parts by weight of an organic peroxide having a scorch temperature of greater than 100°C,
from 0.01 to 0.05 parts by weight of an azo ester and
from 1 to 10 parts by weight of an alcohol having a molecular weight of from 300 to 35,000 g/mol and a boiling point >150°C.

2. A process for producing ceramic and powder metallurgical shaped parts by thermoplastic molding, dewaxing and sintering, which comprises processing a molding compound based on inorganic sinterable materials and comprising
from 70 to 96 parts by weight of a ceramic or metal powder,
from 1 to 10 parts by weight of a semisynthetic wax having a drop point of from 79 to 90°C, an acid number of from 5 to 35 mg KOH/g, a saponification number of from 70 to 160 mg KOH/g, a density of from 0.97 to 1.03 g/cm³ and a viscosity at 100°C of from 20 to 80 mPas,
from 2 to 10 parts by weight of a polyolefin wax having a drop point of from 102 to 158°C, an acid number of from 0 to 64 mg KOH/g, a saponification number of from 0 to 115 mg KOH/g, a density of from 0.87 to 1.03 g/cm³ and a viscosity at 170°C of from 100 to 1500 mPas,
from 1 to 10 parts by weight of an EVA copolymer having a melt index of from 0.2 to 440 dg/min, a VA proportion of from 11 to 42% and a Vicat softening temperature of from 36 to 80°C,
from 0.01 to 0.05 parts by weight of an organic peroxide have a scorch temperature of greater than 100°C,
from 0.01 to 0.05 parts by weight of an azo ester and
from 1 to 10 parts by weight of an alcohol having a molecular weight of from 300 to 35,000 g/mol and a boiling point >150°C
in an injection-molding machine to give a shaped part, keeping the shaped part for from 2 to 6 h at a temperature of from 10 to 100°C in an organic solvent or in water, then heating it in an oven first for from 0.1 to 1 h at from 170 to 200°C and then for from 1 to 10 h at from 200 to 400°C in air, or in an oxygen or protective gas atmosphere and sintering the shaped part which has been freed of the binder.

## Revendications

1. Matière à mouler à base de matériaux frittés non organiques consistant en
70 à 96 parties en poids d'une poudre céramique ou métallique,
1 à 10 parties en poids d'une cire semi-synthétique ayant une température de goutte de 79 à 90°C, un indice d'acidité de 5 à 35 mg de KOH/g, un indice de saponification de 70 à 160 mg de KOH/g, une masse volumique de 0,97 à 1,03 g/cm³ et une viscosité à 100°C de 20 à 80 mPa.s,
2 à 10 parties en poids d'une cire de polyoléfine ayant une température de goutte de 102 à 158°C, un indice d'acidité de 0 à 64 mg de KOH/g, un indice de saponification de 0 à 115 mg de KOH/g, une masse volumique de 0,87 à 1,03 g/cm³ et une viscosité à 170°C de 100 à 1500 mPa.s,
1 à 10 parties au poids d'un copolymère EVA ayant un indice de fusion de 0,2 à 440 dg/min, une proportion de VA (acétate de vinyle ) de 11 à 42 % et une température d'amollissement Vicat de 36 à 80°C,
0,01 à 0,05 partie en poids d'un peroxyde organique ayant une température de prévulcanisation (scorch) de plus de 100°C,
0,01 à 0,05 partie en poids d'un ester azoïque et
1 à 10 parties en poids d'un alcool ayant une masse molaire de 300 à 35000 g/mol et un point d'ébullition supérieur à 150°C.

2. Procédé de préparation de préformés céramiques et la métallurgie des poudres par moulage thermoplastique, déparaffinage et frittage, caractérisé en ce qu'on transforme une matière à mouler à base de matériaux frittés non organiques consistant en
70 à 96 parties en poids d'une poudre céramique ou métallique,
1 à 10 parties en poids d'une cire semi-synthétique ayant une température de goutte de 79 à 90°C, un indice d'acidité de 5 à 35 mg de KOH/g, un indice de saponification de 70 à 160 mg de KOH/g, une masse volumique de 0,97 à 1,03 g/cm³ et une viscosité à 100°C de 20 à 80 mPa.s,
2 à 10 parties en poids d'une cire de polyoléfine ayant une température de goutte de 102 à 158°C, un indice d'acidité de 0 à 64 mg de KOH/g, un indice de saponification de 0 à 115 mg de KOH/g, une masse volumique de 0,87 à 1,03 g/cm³ et une viscosité à 170°C de 100 à 1500 mPa.s,
1 à 10 parties au poids d'un copolymère EVA ayant un indice de fusion de 0,2 à 440 dg/min, une proportion de VA (acétate de vinyle ) de 11 à 42 % et une température d'amollissement Vicat de 36 à 80°C,
0,01 à 0,05 partie en poids d'un peroxyde organique ayant une température de prévulcanisation (scorch) de plus de 100°C,
0,01 à 0,05 partie en poids d'un ester azoïque et
1 à 10 parties en poids d'un alcool ayant une masse molaire de 300 à 35000 g/mol et un point d'ébullition supérieur à 150°C,
sur une machine de moulage par injection en un préformé, en ce qu'on entrepose le préformé pendant 2 à 6 h à une température de 10 à 100°C dans un solvant organique ou dans l'eau, puis en ce qu'on le chauffe dans un four d'abord pendant 0,1 à 1 h jusqu'à 170 à 200°C puis pendant 1 à 10 h jusqu'à 200 à 400°C dans une atmosphère d'air, d'oxygène ou de gaz protecteur et en ce qu'on fritte le préformé débarrassé du liant.
